(19) Europäisches Patentamt
European Patent Office
Office européen des brevets

(11) EP 1 058 716 B1

# (12) EUROPÄISCHE PATENTSCHRIFT

(45) Veröffentlichungstag und Bekanntmachung des Hinweises auf die Patenterteilung:
**10.09.2003 Patentblatt 2003/37**

(21) Anmeldenummer: **99908891.7**

(22) Anmeldetag: **13.02.1999**

(51) Int Cl.[7]: **C09D 11/00**, C09D 17/00

(86) Internationale Anmeldenummer:
**PCT/EP99/00952**

(87) Internationale Veröffentlichungsnummer:
**WO 99/043759 (02.09.1999 Gazette 1999/35)**

(54) **ACRYLHARZHALTIGE PIGMENTZUBEREITUNGEN**

PIGMENT PREPARATIONS CONTAINING AN ACRYLIC RESIN

PREPARATIONS DE PIGMENTS RENFERMANT UNE RESINE ACRYLIQUE

(84) Benannte Vertragsstaaten:
**CH DE FR GB IT LI**

(30) Priorität: **25.02.1998 DE 19807485**
**12.06.1998 DE 19826399**

(43) Veröffentlichungstag der Anmeldung:
**13.12.2000 Patentblatt 2000/50**

(73) Patentinhaber: **BASF AKTIENGESELLSCHAFT**
**67056 Ludwigshafen (DE)**

(72) Erfinder:
- **SCHLÖSSER, Ulrike**
  **D-67433 Neustadt (DE)**
- **KURTZ, Walter**
  **D-67098 Bad Dürkheim (DE)**
- **FRECHE, Mike**
  **D-67304 Eisenberg (DE)**
- **CZECH, Erwin**
  **D-68647 Biblis (DE)**
- **MIELKE, Manfred**
  **D-69118 Heidelberg (DE)**
- **SENS, Rüdiger**
  **D-67069 Ludwigshafen (DE)**
- **SENS, Benno**
  **D-67434 Neustadt (DE)**

(56) Entgegenhaltungen:
**EP-A- 0 340 583**
**EP-A- 0 567 128**
**EP-A- 0 767 225**
**EP-A- 0 812 888**
**EP-A- 0 869 160**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 058 716 B1

## Beschreibung

Die vorliegende Erfindung betrifft neue Pigmentzubereitungen, welche

A) mindestens ein feinteiliges, organisches oder anorganisches Pigment.

B) ein Dispergiermittel auf der Basis von Arylsulfonsäure-Formaldehyd-Kondensationsprodukten oder von oxalkylierten Phenolen der Formel I gemäß Anspruch 1,

C) ein im alkalilösliches Acrylharz,

D) eine anorganische oder organische Base und

E) Wasser

als wesentliche Bestandteile enthalten.

Weiterhin betrifft die Erfindung die Verwendung dieser Pigmentzubereitungen als Tinten, insbesondere als Tinten im Ink-Jet-Verfahren sowie ein Verfahren zum Bedrucken von flächigen oder dreidimensional gestalteten Substraten im Ink-Jet-Verfahren, bei welchem diese Pigmentzubereitungen eingesetzt werden. Nicht zuletzt betrifft die Erfindung die Verwendung der Pigmentzubereitungen zur Herstellung von Tonern.

An die Tinten, die beim Ink-Jet-Verfahren (Tintenstrahldruckverfahren wie Thermal Ink Jet, Piezo Ink Jet, Continuous Ink Jet, Valve Jet) eingesetzt werden, werden eine Reihe von Anforderungen gestellt: Sie müssen zum Drucken geeignete Viskosität und Oberflächenspannung aufweisen, sie müssen lagerstabil sein, d.h., sie sollen nicht koagulieren oder flokulieren und das dispergierte, nicht gelöste, Farbmittel soll sich nicht absetzen, sie dürfen nicht zu einer Verstopfung der Druckerdüse führen, was ebenfalls insbesondere bei pigmenthaltigen, also dispergierte Farbmittelteilchen enthaltenden, Tinten problematisch sein kann, und schließlich müssen sie im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B.

Reibechtheit, Lichtechtheit, Wasserechtheit und Naßreibechtheit, auch auf nicht gestrichenen Papieren aufweisen.

Aus den EP-A-425 439, JP-A-143804/1996, EP-A-753 552 und US-A-5 316 575 sind pigmenthaltige Ink-Jet-Tinten bekannt, die sich jedoch von den vorliegenden Pigmentzubereitungen nicht zuletzt durch die Komponenten (B) und/oder (C) unterscheiden.

Aufgabe der vorliegenden Erfindung war es, neue Pigmentzubereitungen bereitzustellen, welche vorteilhafte Anwendung im Ink-Jet-Verfahren finden können und insbesondere auch hohe Reib-, Naßreib- und Wasserechtheit aufweisen.

Demgemäß wurden die eingangs definierten Pigmentzubereitungen gefunden.

Die erfindungsgemäßen Pigmentzubereitungen enthalten ein feinteiliges, organisches oder anorganisches Pigment. Als organisches Pigment sind hierbei auch Küpenfarbstoffe zu verstehen. Selbstverständlich können die erfindungsgemäßen Pigmentzubereitungen auch Mischungen verschiedener organischer oder verschiedener anorganischer Pigmente oder von organischen und anorganischen Pigmenten enthalten.

Beispiele für geeignete Pigmente (A) sind dabei:

Organische Pigmente:

- Monoazopigmente:

  C.I. Pigment Brown 25;
  C.I. Pigment Orange 5, 13, 36 und 67;
  C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 251, 112, 146, 170 184, 210 und 245;
  C.I. Pigment Yellow 1, 3, 73, 74, 65, 97, 151 und 183;

- Disazopigmente:

  C.I. Pigment Orange 16, 34 und 44;
  C.I. Pigment Red 144, 166, 214 und 242;

C.I. Pigment Yellow 12, 13, 14, 16, 17, 81, 83, 106, 113, 126, 127, 155, 174, 176 und 188;

- Anthanthronpigmente:

  C.I. Pigment Red 168 (C.I. Vat Orange 3);

- Anthrachinonpigmente:

  C.I. Pigment Yellow 147 und 177;
  C.I. Pigment Violet 31;

- Anthrapyrimidinpigmente:

  C.I. Pigment Yellow 108 (C.I. Vat Yellow 20);

- Chinacridonpigmente:

  C.I. Pigment Red 122, 202 und 206 C.I. Pigment Violet 19;

- Chinophthalonpigmente:

  C.I. Pigment Yellow 138;

- Dioxazinpigmente:

  C.I. Pigment Violet 23 und 37;

- Flavanthronpigmente:

  C.I. Pigment Yellow 24 (C.I. Vat Yellow 1);

- Indanthronpigmente:

  C.I. Pigment Blue 60 (C.I. Vat Blue 4) und 64 (C.I. Vat Blue 6);

- Isoindolinpigmente:

  C.I. Pigment Orange 69;
  C.I. Pigment Red 260;
  C.I. Pigment Yellow 139 und 185;

- Isoindolinonpigmente:

  C.I. Pigment Orange 61;
  C.I. Pigment Red 257 und 260;
  C.I. Pigment Yellow 109, 110, 173 und 185;

- Isoviolanthronpigmente:

  C.I. Pigment Violet 31 (C.I. Vat Violet 1);

- Metallkomplexpigmente:

  C.I. Pigment Yellow 117, 150 und 153;
  C.I. Pigment Green 8;

- Perinonpigmente:

C.I. Pigment Orange 43 (C.I. Vat Orange 7);
C.I. Pigment Red 194 (C.I. Vat Red 15);

- Perylenpigmente:

  C.I. Pigment Black 31 und 32;
  C.I. Pigment Red 123, 149, 178, 179 (C.I. Vat Red 23), 190 (C.I. Vat Red 29) und 224;
  C.I. Pigment Violet 29;

- Phthalocyaninpigmente:

  C.I. Pigment Blue 15, 15:1, 15:2, 15:3, 15:4, 15:6 und 16;
  C.I. Pigment Green 7 und 36;

- Pyranthronpigmente:

  C.I. Pigment Orange 51;
  C.I. Pigment Red 216 (C.I. Vat Orange 4);

- Thioindigopigmente:

  C.I. Pigment Red 88 und 181 (C.I. Vat Red 1);
  C.I. Pigment Violet 38 (C.I. Vat Violet 3);

- Triarylcarboniumpigmente:

  C.I. Pigment Blue 1, 61 und 62;
  C.I. Pigment Green 1;
  C.I. Pigment Red 81, 81:1 und 169;
  C.I. Pigment Violet 1, 2, 3 und 27

- C.I. Pigment Black 1 (Anilinschwarz);

- C.I. Pigment Yellow 101 (Aldazingelb);

- C.I. Pigment Brown 22;

Küpenfarbstoffe (außer den bereits oben genannten):

- C.I. Vat Yellow 2, 3, 4, 5, 9, 10, 12, 22, 26, 33, 37, 46, 48, 49 und 50;

- C.I. Vat Orange 1, 2, 5, 9, 11, 13, 15, 19, 26, 29, 30 und 31;

- C.I. Vat Red 2, 10, 12, 13, 14, 16, 19, 21, 31, 32, 37, 41, 51, 52 und 61;

- C.I. Vat Violet 2, 9, 13, 14, 15, 17 und 21;

- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;

- C.I. Vat Green 1, 2, 3, 5, 7, 8, 9, 13, 14, 17, 26, 29, 30, 31, 32, 33, 40, 42, 43, 44 und 49;

- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;

- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

anorganische Pigmente:

- Weißpigmente:

  Titandioxid (C.I. Pigment White 6),Zinkweiß, Farbenzinkoxid; Zinksulfid, Lithopone; Bleiweiß;

- Schwarzpigmente:

  Eisenoxidschwarz (C.I. Pigment Black 11), Eisen-Mangan-Schwarz, Spinellschwarz (C.I. Pigment Black 27); Ruß (C.I. Pigment Black 7);

- Buntpigmente:

  Chromoxid, Chromoxidhydratgrün; Chromgrün (C.I. Pigment Green 48); Cobaltgrün (C.I. Pigment Green 50); Ultramaringrün;

  Kobaltblau (C.I. Pigment Blue 28 und 36); Ultramarinblau; Eisenblau (C.I. Pigment Blue 27); Manganblau;

  Ultramarinviolett; Kobalt- und Manganviolett;

  Eisenoxidrot (C.I. Pigment Red 101); Cadmiumsulfoselenid (C.I. Pigment Red 108); Molybdatrot (C.I. Pigment Red 104); Ultramarinrot;

  Eisenoxidbraun, Mischbraun, Spinell- und Korundphasen (C.I. Pigment Brown 24, 29 und 31), Chromorange;

  Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);

- Interferenzpigmente:

  Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinophthalonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Das enthaltene Pigment sollte möglichst feinteilig sein. Bevorzugt haben 95 %, besonders bevorzugt 99 %, der Pigmentteilchen eine Teilchengröße $\leq 1\ \mu m$, vorzugsweise $\leq 0,5\ \mu m$.

Die erfindungsgemäßen Pigmentzubereitungen enthalten in der Regel 0,1 bis 35 Gew.-%, bevorzugt 0,1 bis 20 Gew.-%, besonders bevorzugt 0,2 bis 10 Gew.-%, Pigment (A).

Als Komponente (B) enthalten die erfindungsgemäßen Pigmentzubereitungen ein wasserlösliches Dispergiermittel auf der Basis eines oder mehrerer Arylsulfonsäure-Formaldehyd-Kondensationsprodukte (B1) oder eines oder mehrerer wasserlöslicher oxalkylierter Phenole (B2).

Die Kondensationsprodukte (B1) sind durch Sulfonieren aromatischer Verbindungen wie Naphthalin selbst oder Naphthalin enthaltender Gemische und anschließendes Kondensieren der gebildeten Arylsulfonsäuren mit Formaldehyd erhältlich.

Als Ausgangsprodukt für die Herstellung der Arylsulfonsäuren kommt z.B. ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an und werden auch als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30 - 55 |
| 2-Methylnaphthalin | 5 - 15 |
| 1-Methylnaphthalin | 4 - 10 |
| Inden | 3 - 10 |
| Diphenyl | 1 - 5 |
| Methylinden | 1 - 5 |
| Acenaphthen | 1 - 4 |

Die Aromatenfraktion enthält außerdem an identifizierten Bestandteilen in Mengen von 0,1 bis etwa 2 Gew. % folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acetnaphthylen und Toluol.

Besonders geeignete Arylsulfonsäuren enthalten in der Regel α-und β-Naphthalinsulfonsäuren, wobei das Verhältnis der α- zu den β-Isomeren üblicherweise 20:1 bis 1:8, insbesondere 10:1 bis 1:5 beträgt.

Die Kondensationsprodukte weisen bei Verwendung der o.g. Aromatenfraktion bevorzugt einen Sulfonsäuregruppengehalt von maximal 40 Gew.-% auf.

Die Herstellung des Dispergiermittels (B1) kann in Gegenwart von aromatischen oder langkettigen aliphatischen Carbonsäuren, deren Salzen, Anhydriden oder Mischungen dieser Verbindungen vorgenommen werden.

Beispiele für geeignete aromatische Carbonsäuren oder deren Derivate sind Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen, natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure oder Isotridecansäure.

Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen wie Ethanolamin, Diethanolamin oder Triethanolamin erhältlich sind.

Bevorzugt sind Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure.

Als Dispergiermittel (B1) eignen sich in diesem Fall vor allem solche Gemische, die 50 bis 97 Gew.-%, insbesondere 70 bis 95 Gew.-%, Arylsulfonsäure-Formaldehyd-Kondensationsprodukte und 3 bis 50 Gew.-%, insbesondere 5 bis 30 Gew.-%, aromatische oder langkettige aliphatische Carbonsäuren, deren Salze oder deren Anhydride oder Mischungen davon enthalten.

Vorteilhaft kann man bei der Herstellung der Arylsulfonsäure-Formaldehyd-Kondensationsprodukte (B1) auch von reinem Naphthalin (Reingehalt in der Regel > 95 %) ausgehen.

Bei der Kondensation werden im allgemeinen 0,5 bis 1,5 mol, vorzugsweise 0,7 bis 1 mol, Formaldehyd je mol Naphthalin eingesetzt.

Der Sulfonsäuregruppengehalt dieser Kondensationsprodukte liegt zweckmäßigerweise bei etwa 40 bis 50 Gew.-%.

Die Dispergiermittel (B1) sind bekannt und z.B. in der US-A-5 186 846, der DE-A-11 37 005 oder der EP-A-380 778 beschrieben.

Als Dispergiermittel (B2) sind oxalkylierte Phenole der Formel I bzw. II

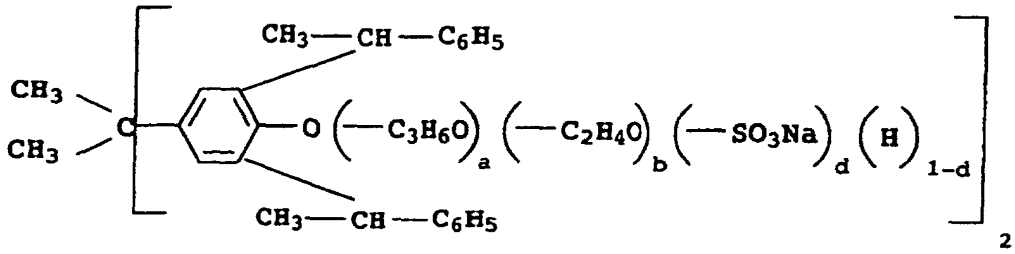

(Ia)

oder der Formel Ib

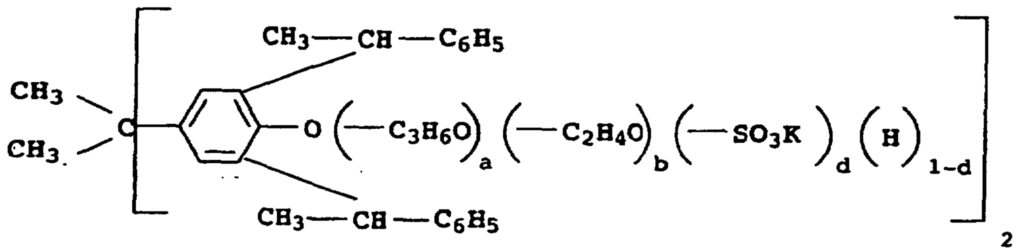

(Ib)

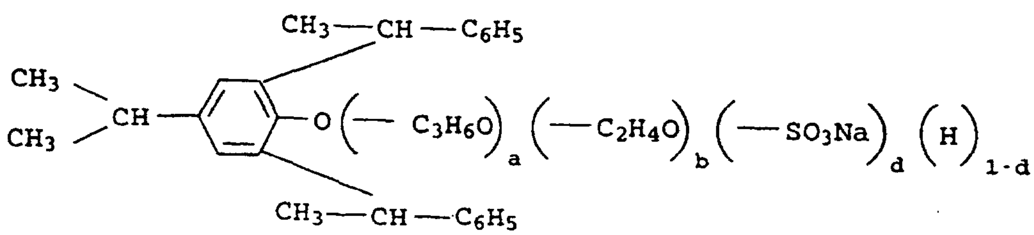

(II)

in denen

a 0 bis im Mittel 125,

b im Mittel 37 bis 250, wobei im Falle b>37 das Verhältnis b:a mindestens 1:1 ist, und

d 0 oder 1 bedeuten,

oder deren Gemische bevorzugt.

Die Produkte der Formel I und II können durch Umsetzen der Phenolderivate der Formel III oder IV

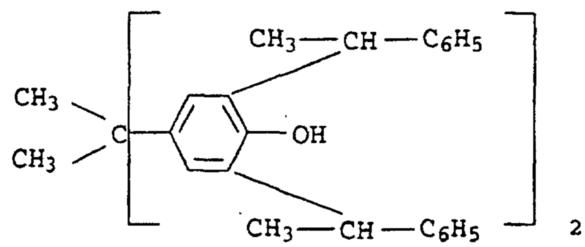

(III)

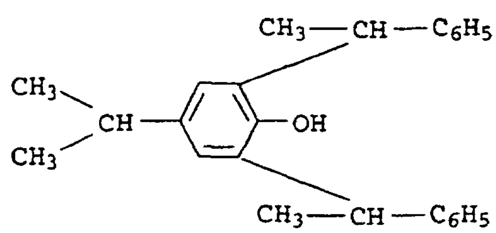

(IV)

mit Propylenoxid und folgender Umsetzung des Adduktes mit Ethylenoxid oder durch Umsetzen von III und/oder IV mit Ethylenoxid erhalten werden. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral gestellt.

Die Phenole der Formel III und IV können durch Umsetzen von Phenol oder 2,2-(p,p'-Bishydroxydiphenyl) propan mit 3 oder 4 mol Styrol in Gegenwart von Säure als Katalysator erhalten werden. Die Phenole III und IV werden nach bekannten Verfahren zuerst mit Ethylenoxid oder nur mit Ethylenoxid in Gegenwart von sauer oder alkalisch wirkenden Katalysatoren zu den entsprechenden Oxalkylierungsprodukten I und II mit d=O umgesetzt. Die Oxalkylierung kann z.B. nach dem in der US-A-2 979 528 beschriebenen Verfahren erfolgen. Für den Fall b > 37 muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt, wobei die Menge so gewählt werden kann, daß alle freien Hydroxygruppen oder nur ein Teil sulfatiert wird. Im letzteren Falle entstehen Gemische aus Verbindungen der Formel I und II, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze, z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Dispergiermittel (B2), bei denen a 0 bis im Mittel 2,5, b im Mittel 37 bis 250 und d 0 bis im Mittel 0,5 ist. Besonders bevorzugt sind Dispergiermittel (B2), bei denen a 0 bis im Mittel 2,5, b im Mittel 50 bis 100 und d im Mittel 0,5 ist.

Die Dispergiermittel (B2) sind bekannt und z.B. in der US-A-4 218 218 beschrieben.

Die erfindungsgemäßen Pigmentzubereitungen enthalten in der Regel 0,1 bis 25 Gew.-%, vorzugsweise 0,5 bis 10 Gew.-%, Dispergiermittel (B).

Als Komponente (C) enthalten die erfindungsgemäßen Pigmentzubereitungen ein im alkalischen, d.h., bei einem pH-Wert von üblicherweise > 7, lösliches Acrylharz.

Bevorzugte Acrylharze (C) sind Copolymere von acrylgruppenhaltigen Monomeren wie Methacrylsäure und Methacrylsäureester, insbesondere Acrylsäure und Acrylsäureester, und vinylaromatischen Verbindungen wie Styrol

und Styrolderivaten.

Besonders bevorzugt sind Styrol/Acrylsäure-Copolymere. Die Carboxylgruppen dieser Copolymere können teilweise verestert, z.B. ethoxyliert oder propoxyliert, sein.

Ganz besonders bevorzugte Styrol/Acrylsäure-Copolymere haben einen Styrolgehalt von etwa 35 bis 50 Gew.-% und eine Säurezahl von 130 bis 250.

Ihr mittleres Molekulargewicht $M_w$ beträgt vorzugsweise 1000 bis 15000. Die Glasübergangstemperatur der Copolymere liegt bevorzugt bei 60 bis 90°C.

Die Acrylharze (C) sind bekannt (z.B. EP-A-68 024 und 96 901) und im Handel z.B. unter dem Namen Joncryl®, Carboset®, Morez® oder Glascol® erhältlich.

Die erfindungsgemäßen Pigmentzubereitungen enthalten im allgemeinen 0,1 bis 40 Gew.-%, bevorzugt 0,5 bis 25 Gew.-%, besonders bevorzugt 3 bis 7 Gew.-%, Acrylharz (C).

Da die Acrylharze (C) in gelöster Form vorliegen sollen, wird den erfindungsgemäßen Pigmentzubereitungen eine anorganische oder organische Base (D) zugesetzt.

Geeignete Basen (D) sind beispielsweise Alkalimetallhydroxide, Ammoniak und basische Ammoniumsalze wie Ammoniumcarbonat, aliphatische Amine wie Mono-, Di- und Trialkylamine mit in der Regel bis zu vier Kohlenstoffatomen, heterocyclische Amine wie Morpholin und Piperazin und Alkanolamine wie Mono-, Di- und Trialkanolamine und Mono- und Dialkanolalkylamine mit üblicherweise bis zu vier Kohlenstoffatomen.

Bevorzugt werden flüchtige Basen eingesetzt.

Als besonders bevorzugte Base (D) sei z.B. Ammoniak genannt.

Die erfindungsgemäßen Pigmentzubereitungen enthalten in Abhängigkeit von dem gewünschten pH-Wert üblicherweise 0,1 bis 10 Gew.-% Base (D).

Wasser stellt den Hauptbestandteil (E) der erfindungsgemäßen Pigmentzubereitungen dar. Sein Gehalt beträgt in der Regel 35 bis 90 Gew.-%, bevorzugt 45 bis 80 Gew.-%.

Vorzugsweise enthalten die erfindungsgemäßen Pigmentzubereitungen als zusätzliche Komponente (F) ein wasserlösliches Mittel mit wasserrückhaltender Wirkung, welches sie für das Ink-Jet-Verfahren besonders geeignet macht.

Als Komponente (F) eignen sich neben mehrwertigen, insbesondere 3 bis 8-Kohlenstoffatome enthaltenden Alkoholen, wie Glycerin, Erythrit, Pentaerythrit, Pentiten wie Arabit, Adonit und Xylit und Hexiten wie Sorbit, Mannit und Dulcit, vor allem Polyalkylenglykole und Polyalkylenglykolmonoalkylether, worunter auch die niederen (Di-, Tri- und Tetra-) Alkylenglykole und Alkylenglykolether verstanden werden sollen. Bevorzugt weisen diese Verbindungen mittlere Molekulargewichte von 100 bis 1500 auf, wobei Polyethylenglykole und Polyethylenglykolether mit einem mittleren Molekulargewicht von ≤ 800 besonders bevorzugt sind.

Beispiele für diese Komponenten (F) sind Di-,Tri- und Tetraethylenglykol, Diethylenglykolmonomethyl-, -ethyl-, -propyl und -butylether und Triethylenglykolmonomethyl-, -ethyl-, -propylund -butylether.

Weiterhin als Komponente (F) geeignet sind Pyrrolidon und N-Akylpyrrolidone wie N-Methylpyrrolidon, die zusätzlich das Eindringen der Tinte in das Substratmaterial (z.B. Papier) unterstützen.

Beispiele für besonders bevorzugte Komponenten (F) sind Mono-, Di- und Triethylenglykolmonobutylether und N-Methylpyrrolidon.

Der Anteil der Komponente (F) an den erfindungsgemäßen Pigmentzubereitungen beträgt in der Regel 0,1 bis 35 Gew.-%, insbesondere 5 bis 25 Gew.-%.

Dabei ist oft die Verwendung von Kombinationen der genannten Lösungsmittel (F) zweckmäßig. Besonders geeignet ist z.B. eine Kombination von N-Methylpyrrolidon und Triethylenglykolmonobutylether.

Selbstverständlich können die erfindungsgemäßen Pigmentzubereitungen weitere Hilfsmittel, wie sie insbesondere für (wäßrige) Ink-Jet-Tinten und in der Druck- und Lackindustrie üblich sind, enthalten. Genannt seien z.B. Konservierungsmittel (wie 1,2-Benzisothiazolin-3-on und dessen Alkalimetallsalze, Glutardialdehyd und/oder Tetramethylolacetylenharnstoff), Antioxidantien, Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken), Mittel zur Regulierung der Viskosität, Verlaufshilfsmittel, Benetzer, Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer und Antistatikmittel. Wenn diese Mittel Bestandteil der erfindungsgemäßen Pigmentzubereitungen sind, beträgt ihre Gesamtmenge in der Regel ≤ 1 Gew. -%, bezogen auf das Gewicht der Zubereitung.

Die erfindungsgemäßen Pigmentzubereitungen weisen üblicherweise eine dynamische Viskosität von 1 bis 20 $mm^2$/sec, vorzugsweise 2 bis 10 $mm^2$/sec auf.

Die Oberflächenspannung der erfindungsgemäßen Pigmentzubereitungen beträgt in der Regel 20 bis 70 mN/m.

Der pH-Wert der erfindungsgemäßen Pigmentzubereitungen liegt im allgemeinen bei > 7 bis 12, vorzugsweise 9 bis 11.

Bei der Herstellung der erfindungsgemäßen Pigmentzubereitungen geht man zweckmäßigerweise wie folgt

vor:

Man mischt das Pigment (A), beispielsweise in Form eines wasserhaltigen Preßkuchens, zusammen mit dem Dispergiermittel (B) in Gegenwart von Wasser und dispergiert in einer geeigneten Apparatur vor. Die resultierende Mischung mahlt man anschließend in einer Mühle, um die gewünschte Pigmentteilchengrößenverteilung einzustellen, und gibt dann das alkalisch gelöste Acrylharz (C) sowie gewünschtenfalls weitere Hilfsmittel zu. Schließlich nimmt man die Endeinstellung der Zubereitung vor, indem man noch entsprechende Mengen Wasser und gegebenenfalls ein oder mehrere Lösungsmittel (F) sowie gegebenenfalls weitere Hilfsmittel zusetzt und nach dem Mischen mit einer Filtriervorrichtung mit Feinabtrennung im Bereich von in der Regel 10 bis 1 µm und vorzugsweise anschließend mit einer weiteren Filtriervorrichtung mit Feinabtrennung im Bereich von 1 bis 0,5 µm filtriert.

Die erfindungsgemäßen Pigmentzubereitungen können vorteilhaft in dem ebenfalls erfindungsgemäßen Verfahren zum Bedrucken von flächigen oder dreidimensional gestalteten Substraten in Ink-Jet-Verfahren eingesetzt werden, welches dadurch gekennzeichnet ist, daß man die Pigmentzubereitungen auf das Substrat aufdruckt und den erhaltenen Druck anschließend fixiert.

Beim Ink-Jet-Verfahren werden die üblicherweise wäßrigen Tinten in kleinen Tröpfchen direkt auf das Substrat gesprüht. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Pigmentzubereitungen als Tinten für das Bubble-Jet-Verfahren und für das Verfahren mittels eines piezoelektrischen Kristalls.

Die erfindungsgemäßen Pigmentzubereitungen können auf alle Arten von Substratmaterialien gedruckt werden. Als Substratmaterialien seien z.B.

- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

genannt.

Das Substratmaterial kann dabei flächig oder dreidimensional gestaltet sein und sowohl vollflächig als auch bildmäßig mit den erfindungsgemäßen Pigmentzubereitungen bedruckt werden.

Die erfindungsgemäßen Pigmentzubereitungen zeichnen sich als Ink-Jet-Tinten mit insgesamt vorteilhaften Anwendungseigenschaften, vor allem gutem Laufverhalten, aus und ergeben Drucke hoher Reib-, Naßreib-, Licht- und Wasserechtheit. Die Pigmentzubereitungen eignen sich auch hervorragend zur Herstellung von Schreibtinten und von Tonern, insbesondere von wäßrigen, flüssigen Tonern und von pulverförmigen Tonern. Die Toner können dabei z. B. konventionell durch Mischen, Kneten, Mahlen und Sichten oder durch Polymerisation, vor allem Emulsionspolymerisation, hergestellt werden.

Beispiele

I) Herstellung erfindungsgemäßer Pigmentzubereitungen

Zubereitung 1

Eine Mischung von 22,5 g Pigment Blue 15:3, 3 g des unten angegebenen Dispergiermittels B2a, 9,75 g 25 gew.-%iger wäßriger Ammoniaklösung, 15 g des unten angegebenen Acrylharzes C1, 0,3 g eines ethoxylierten Acetylendiols (30 mol EO/mol Acetylendiol) und 99,45 g vollentsalztem Wasser (Gesamtgewicht 150 g) wurde so lange in einer Rührwerkskugelmühle gemahlen, bis 99 % der Pigmentteilchen eine Größe von <1 µm aufwiesen.

Die resultierende Dispersion wurde durch Zugabe von 88,5 g Triethylenglykolmonobutylether, 88,5 g N-Methylpyrrolidon, 1,5 g einer 5,9 gew. -%igen Lösung von 1,2-Benzisothiazolin-3-on-Natriumsalz in Propylenglykol und 421,59 vollentsalztem Wasser (Endgewicht 750 g) auf einen Pigmentgehalt von 3 Gew.-% verdünnt, zentrifugiert und zunächst über ein Filter K 250 (Porenweite 4,25-9,25 µm; Fa. Seitz) und dann über ein Filter KS 80 (Porenweite 0,6-1,1 µm; Fa. Seitz) filtriert.

Die Zubereitungen 2 bis 24 wurden analog zur Zubereitung 1 hergestellt.

Dabei wurden folgende Dispergiermittel eingesetzt:

B1a: Arylsulfonsäure-Formaldehyd-Kondensationsprodukt, das zusätzlich noch Benzoesäure enthält und in der US-A-5 186 846 als Dispergiermittel 3 beschrieben ist,

B1b: Naphthalinsulfonsäure-Formaldehyd-Kondensationsprodukt, das in Beispiel 1 der EP-A-380 778 beschrieben ist,

B1c: Naphthalinsulfonsäure-Formaldehyd-Kondensationsprodukt, das in Beispiel 2 der DE-A-11 37 005 beschrieben ist, oder

B2: alkoxyliertes Phenol, das in der US-A-4 218 218 als Dispergiermittel 13 beschrieben ist.

Als Acrylharz wurden folgende Styrol/Acrylsäure-Copolymere eingesetzt:

C1: $M_w$ = 9200; Tg = 79°C; Säurezahl = 150; Styrolgehalt = 48 Gew.-%;

C2: $M_w$ = 5000; Tg = 76°C; Säurezahl = 225; Styrolgehalt = 40 Gew.-%;

C3: $M_w$ = 13500; Tg = 83°C; Säurezahl = 190; Styrolgehalt = 42,2 Gew.-% oder

C4: $M_w$ = 8500; Tg = 85°C; Säurezahl = 215; Styrolgehalt = 41 Gew.-%;

Weitere Angaben zu den erhaltenen Pigmentzubereitungen sind in der folgenden Tabelle zusammengestellt. Bei den Prozentangaben handelt es sich jeweils um Gew.-%.

Tabelle 1

| | Zubereitung Nr. | | | | | | |
|---|---|---|---|---|---|---|---|
| | 1 | 2 | 3 | 4 | 5 | 6 | 7 |
| C.I. Pigment Blue 15:3 | 3 % | | | | | | 3 % |
| C.I. Pigment Red 122 | | 3 % | | | | | |
| C.I. Pigment Yellow 185 | | | 3 % | | | | |
| C.I. Pigment Yellow 138 | | | | 3 % | | | |
| C.I. Pigment Orange 34 | | | | | 3 % | | |
| C.I. Pigment Black 7 | | | | | | 3 % | |
| C.I. Pigment Red 12 | | | | | | | |
| C.I. Pigment Yellow 13 | | | | | | | |
| C.I. Pigment Green 7 | | | | | | | |
| Dispergiermittel | 0,4 % B2a | 0,4 % B1a | 0,4 % B1a | 0,4 % B2a | 0,4 % B2a | 0,3 % B1a | 0,4 % B1b |
| Acrylharz | 2,0 % C1 | 2,1 % C2 | 2,5 % C3 | 2,5 % C4 | 2,0 % C3 | 2,0 % C3 | 2,0 % C3 |
| Ammoniak, 25%ig in Wasser | 1,3 % | 1,8 % | 1,5 % | 1,7 % | 1,5 % | 1,5 % | 1,5 % |
| Triethylenglykolmonobutylether | 11,7 % | 11,7 % | 11,7 % | 11,7 % | 11,7 % | 11,7 % | 11,7 % |
| N-Methylpyrrolidon | 11,7 % | 11,7 % | 11,7 % | 11,7 % | 11,7 % | 11,7 % | 11,7 % |
| 1,2-Benzisothiazolin-3-on-Na-Salz, 5,9%ig in Propylenglykol | 0,2 % | 0,2 % | 0,2 % | 0,2 % | 0,2 % | 0,2 % | 0,2 % |
| ethoxyliertes Acetylendiol | | | 0,04 % | 0,04 % | | 0,03 % | |
| vollentsalztes Wasser | 69,7 % | 69,1 % | 68,96 % | 68,76 % | 69,5 % | 69,57 % | 69,5 % |
| Gesamt | 100 % | 100 % | 100 % | 100 % | 100 % | 100 % | 100 % |

| | Zubereitung Nr. | | | | | |
|---|---|---|---|---|---|---|
| | 8 | 9 | 10 | 11 | 12 | 13 |
| C.I. Pigment Blue 15:3 | | | | | | |
| C.I. Pigment Red 122 | | | | | | |
| C.I. Pigment Yellow 185 | | | | | | |
| C.I. Pigment Yellow 138 | | | | | | |
| C.I. Pigment Orange 34 | | | | | | |
| C.I. Pigment Black 7 | | | | 3 % | | |
| C.I. Pigment Red 12 | 3 % | | | | | |
| C.I. Pigment Yellow 13 | | 3 % | 3 % | | | 3 % |
| C.I. Pigment Green 7 | | | | | 3 % | |
| Dispergiermittel | 0,3 % B1c | 0,3 % B2a | 0,4 % B2a | 0,3 % B1a | 0,3 % B1b | 0,3 % B1a |
| Acrylharz | 2,0 % C3 | 2,0 % C3 | 2,0 % C4 | 2,0 % C1 | 2,0 % C1 | 2,0 % C3 |
| Ammoniak, 25%ig in Wasser | 1,5 % | 1,5 % | 1,7 % | 1,3 % | 1,3 % | 1,5 % |
| Triethylenglykolmonobutylether | 11,7 % | 11,7 % | 11,7 % | 11,7 % | 11,7 % | 11,7 % |
| N-Methylpyrrolidon | 11,7 % | 11,7 % | 11,7 % | 11,7 % | 11,7 % | 11,7 % |
| 1,2-Benzisothiazolin-3-on-Na-Salz, 5,9%ig in Propylenglykol | 0,2 % | 0,2 % | 0,2 % | 0,2 % | 0,2 % | 0,2 % |
| ethoxyliertes Acetylendiol | 0,03 % | 0,05 % | | 0,03 % | 0,05 % | 0,05 % |
| vollentsalztes Wasser | 69,57 % | 69,55 % | 69,3 % | 69,77 % | 70,2 % | 70,0 % |
| Gesamt | 100 % | 100 % | 100 % | 100 % | 100 % | 100 % |

| | Zubereitung Nr. | | | | |
|---|---|---|---|---|---|
| | 14 | 15 | 16 | 17 | 18 |
| C.I. Pigment Blue 15:3 | 3 % | | | | |
| C.I. Pigment Red 122 | | 3 % | | | |
| C.I. Pigment Yellow 185 | | | | | |
| C.I. Pigment Yellow 138 | | | | | |
| C.I. Pigment Orange 34 | | | 3 % | | |
| C.I. Pigment Black 7 | | | | 3 % | |
| C.I. Pigment Red 12 | | | | | |
| C.I. Pigment Yellow 13 | | | | | |
| C.I. Pigment Green 7 | | | | | 3 % |
| Dispergiermittel | 0,3 % B1b | 0,3 % B1c | 0,4 % B2a | 0,4 % B1c | 0,3 % B2a |
| Acrylharz | 2,0 % C4 | 2,0 % C4 | 2,0 % C1 | 2,0 % C1 | 2,0 % C1 |
| Ammoniak, 25%ig in Wasser | 1,7 % | 1,7 % | 1,3 % | 1,3 % | 1,3 % |
| Triethylenglykolmonobutylether | 11,7 % | 11,7 % | 11,7 % | 11,7 % | 11,7 % |
| N-Methylpyrrolidon | 11,7 % | 11,7 % | 11,7 % | 11,7 % | 11,7 % |
| 1,2-Benzisothiazolin-3-on-Na-Salz, 5,9%ig in Propylenglykol | 0,2 % | 0,2 % | 0,2 % | 0,2 % | 0,2 % |
| ethoxyliertes Acetylendiol | 0,03 % | 0,05 % | | | 0,05 % |
| vollentsalztes Wasser | 69,37 % | 69,35 % | 69,7 % | 69,7 % | 69,75 % |
| Gesamt | 100 % | 100 % | 100 % | 100 % | 100 % |

| | Zubereitung Nr. | | | | | |
|---|---|---|---|---|---|---|
| | 19 | 20 | 21 | 22 | 23 | 24 |
| C.I. Pigment Blue 15:3 | 3 % | | | | | |
| C.I. Pigment Red 122 | | 3 % | | | | |
| C.I. Pigment Yellow 185 | | | | | | |
| C.I. Pigment Yellow 138 | | | | | | |
| C.I. Pigment Orange 34 | | | 3 % | | | |
| C.I. Pigment Black 7 | | | | 3 % | | |
| C.I. Pigment Red 12 | | | | | | |
| C.I. Pigment Yellow 13 | | | | | | 3 % |
| C.I. Pigment Green 7 | | | | | 3 % | |
| Dispergiermittel | 0,3 % B1c | 0,3 % B1c | 0,3 % B1c | 0,3 % B1c | 0,3 % B1c | 0,3 % B1c |
| Acrylharz | 1,6 % C3 | 1,98 % C3 | 1,98 % C3 | 2,4 % C3 | 1,98 % C3 | 1,98 % C3 |
| Ammoniak, 25%ig in Wasser | 1,5 % | 1,5 % | 1,5 % | 1,5 % | 1,5 % | 1,5 % |
| Triethylenglykolmonobutylether | 10,5 % | 10,5 % | 10,5 % | 10,5 % | 10,5 % | 10,5 % |
| N-Methylpyrrolidon | 10,5 % | 10,5 % | 10,5 % | 10,5 % | 10,5 % | 10,5 % |
| 1,2-Benzisothiazolin-3-on-Na-Salz, 5,9%ig in Propylenglykol | | | | | | |
| ethoxyliertes Acetylendiol | 0,02 % | 0,02 % | 0,02 % | 0,03 % | 0,03 % | 0,03 % |
| vollentsalztes Wasser | 72,58 % | 72,2 % | 72,2 % | 71,74 % | 72,2 % | 72,2 % |
| Gesamt | 100 % | 100 % | 100 % | 100 % | 100 % | 100 % |

II) Prüfung der Pigmentzubereitungen

Mit den Pigmentzubereitungen 1 bis 19 wurde unter Verwendung a) eines handelsüblichen Ink-Jet-Druckers der Firma Hewlett-Packard (HP Desk Jet 500) bzw. b) eines handelsüblichen Ink-Jet-Druckers der Firma Epson (Stylus Color 500) ein Schachbrettmuster (vollfarbig/unbedruckt, Kastengröße 1 cm x 1 cm) als Prüfdruckmuster auf das jeweils zugehörige Papier (a) Laser Copier, 80 g/m$^2$, Intercopy; b) Paper for 720 dpi Printing Epson) gedruckt.

Zur Prüfung der Reibechtheit der Drucke wurde 10 s mit dem Finger mit leichtem Druck mehrmals mit kreisenden Bewegungen über bedruckte und nichtbedruckte Stellen gefahren. Kein Verschmieren des Drucks wurde mit der Note 1 und starkes Verschmieren mit der Note 6 bewertet.

Die Naßreibechtheit wurde analog geprüft, nur wurde der Druck vor dem Verreiben mit VE-Wasser überspült. Kein Ausbluten/Verschmieren des Drucks wurde mit der Note 1 und starkes Ausbluten/Verschmieren mit der Note 6 bewertet.

Reib- und Naßreibechtheit der mit den Pigmentzubereitungen 1 bis 24 erhaltenen Drucke wurden durchweg mit der Note 1 bewertet.

## Patentansprüche

1. Pigmentzubereitungen, enthaltend

   A) mindestens ein feinteiliges, organisches oder anorganisches Pigment,

   B) ein Dispergiermittel auf der Basis von Arylsulfonsäure-Formaldehyd-Kondensationsprodukten oder von oxalkylierten Phenolen der Formel Ia

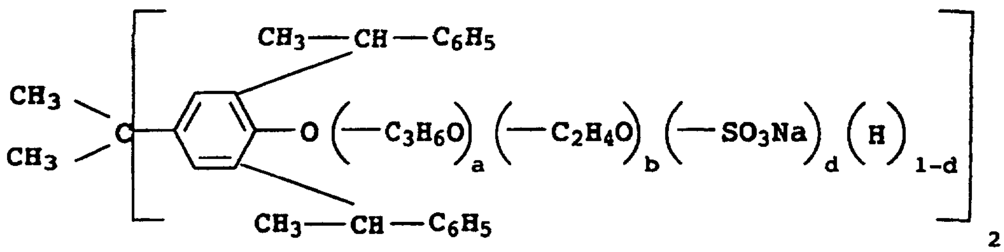

(Ia)

oder der Formel Ib

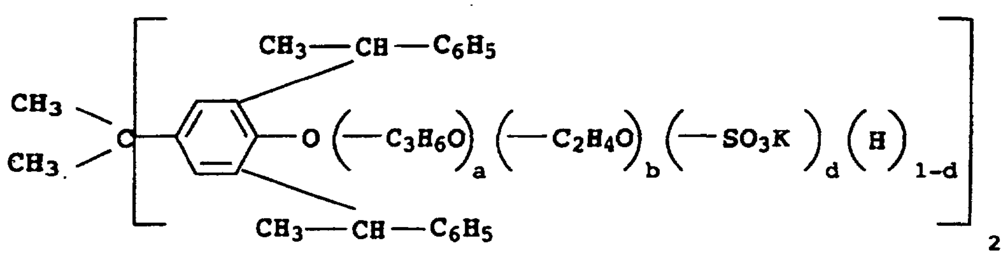

(Ib)

in der

a 0 bis im Mittel 125,

b im Mittel 37 bis 250, wobei im Falle b>37 das Verhältnis b:a mindestens 1:1 ist, und

d 0 oder 1 bedeuten,

C) ein alkalilösliches Acrylharz,

D) eine anorganische oder organische Base und

E) Wasser

als wesentliche Bestandteile.

**2.** Pigmentzubereitungen nach Anspruch 1, die als Komponente (C) ein Styrol/Acrylat-Copolymer mit einem Styrolgehalt von 35 bis 50 Gew.-% und einer Säurezahl von 130 bis 250 enthalten.

**3.** Pigmentzubereitungen nach Anspruch 1 oder 2, die als Komponente (C) ein Styrol/Acrylat-Copolymer mit einem mittleren Molekulargewicht $M_w$ von 1000 bis 15000 enthalten.

**4.** Pigmentzubereitungen nach den Ansprüchen 1 bis 3, die, jeweils bezogen auf das Gewicht der Zubereitung,

0,1 bis 35 Gew. -% der Komponente (A),
0,1 bis 25 Gew. -% der Komponente (B)
0,1 bis 40 Gew. -% der Komponente (C)
0,1 bis 10 Gew. -% der Komponente (D) und
mindestens 35 Gew. -% dar Komponente (E)

enthalten.

**5.** Pigmentzubereitungen nach den Ansprüchen 1 bis 4, die zusätzlich einen mehrwertigen Alkohol, ein Polyalkylenglykol, einen Polyalkylenglykolalkylether oder ein N-Alkylpyrrolidon oder Mischungen davon als Komponente (F) enthalten.

**6.** Pigmentzubereitungen nach Anspruch 5, die, bezogen auf das Gewicht der Zubereitung, 0,1 bis 35 Gew.-% der Komponente (F) enthalten.

**7.** Pigmentzubereitungen nach den Ansprüchen 1 bis 6, bei denen 95 % der enthaltenen Pigmentteilchen (A) $\leq 1\ \mu m$ sind.

**8.** Verwendung der Pigmentzubereitungen gemäß der Ansprüchen 1 bis 7 als Tinten.

**9.** Verwendung der Pigmentzubereitungen gemäß den Ansprüchen 1 bis 7 als Tinten für das Ink-Jet-Verfahren.

**10.** Verfahren zum Bedrucken von flächigen oder dreidimensional gestalteten Substraten im Ink-Jet-Verfahren, **dadurch gekennzeichnet, daß** man Pigmentzubereitungen gemäß den Ansprüchen 1 bis 7 auf das Substrat aufdruckt.

**11.** Verwendung der Pigmentzubereitungen gemäß den Ansprüchen 1 bis 7 zur Herstellung von Tonern.

## Claims

**1.** Pigment preparations comprising

A) at least one finely divided, organic or inorganic pigment,

B) a dispersant based on arylsulfonic acid/formaldehyde condensation products or on alkoxylated phenols of the formula Ia

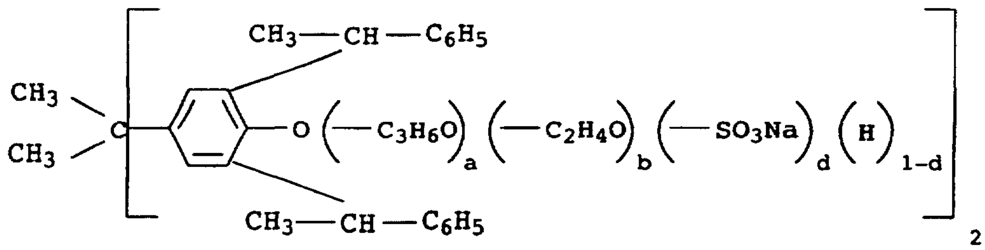

(Ia)

or of the formula Ib

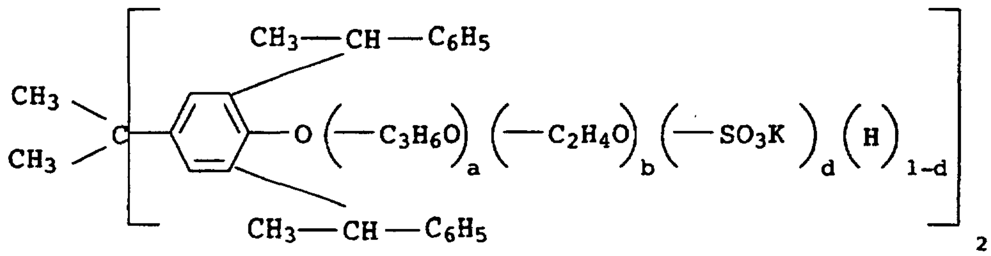

(Ib)

where

a is from 0 to on average 125,

b is on average from 37 to 250, the ratio b:a being at least 1:1 when b > 37, and

d is 0 or 1,

C) an alkali-soluble acrylic resin,

D) an inorganic or organic base, and

E) water

as essential constituents.

**2.** Pigment preparations as claimed in claim 1, comprising as component (C) a styrene/acrylate copolymer having a styrene content of from 35 to 50% by weight and an acid number of from 130 to 250.

**3.** Pigment preparations as claimed in claim 1 or 2, comprising as component (C) a styrene/acrylate copolymer having an average molecular weight $M_w$ of from 1000 to 15,000.

**4.** Pigment preparations as claimed in any of claims 1 to 3, comprising, based on the weight of the preparation,

from 0.1 to 35% by weight of component (A),
from 0.1 to 25% by weight of component (B)
from 0.1 to 40% by weight of component (C)
from 0.1 to 10% by weight of component (D) and
at least 35% by weight of component (E).

**5.** Pigment preparations as claimed in any of claims 1 to 4, further comprising a polyhydric alcohol, a polyalkylene glycol, a polyalkylene glycol alkyl ether or an N-alkylpyrrolidone or mixtures thereof as component (F).

**6.** Pigment preparations as claimed in claim 5, comprising, based on the weight of the preparation, from 0.1 to 35% by weight of component (F).

**7.** Pigment preparations as claimed in any of claims 1 to 6, wherein 95% of the pigment particles (A) present are ≤ 1 µm.

**8.** The use of the pigment preparations of any of claims 1 to 7 as inks.

**9.** The use of the pigment preparations of any of claims 1 to 7 as inks in the ink-jet process.

**10.** A process for printing sheetlike or three-dimensionally configured substrates by the ink-jet process, which comprises printing pigment preparations as claimed in any of claims 1 to 7 onto the substrate.

**11.** The use of the pigment preparations of any of claims 1 to 7 for producing toners.

## Revendications

**1.** Préparations de pigments, contenant

A) au moins un pigment organique ou inorganique, finement divisé,

B) un agent dispersant à base de produits de condensation d'acide arylsulfonique-formaldéhyde ou de phénols oxyalkylés de formule Ia

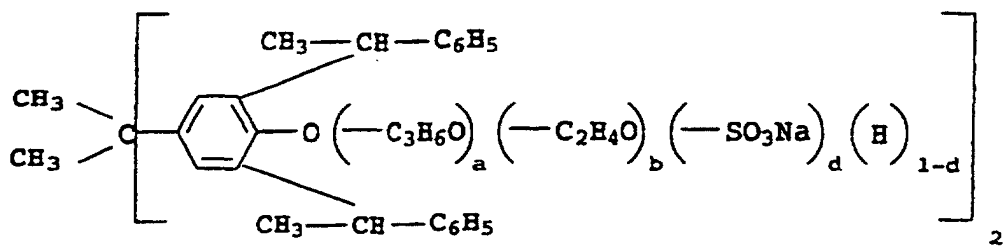

(Ia)

ou de formule Ib

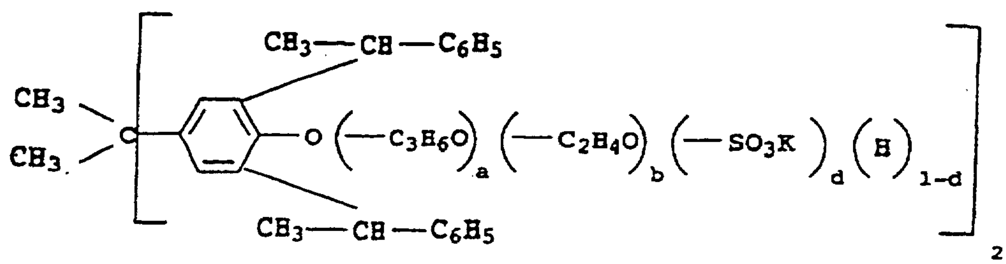

(Ib)

dans laquelle

a vaut de 0 à en moyenne 125,

b représente en moyenne 37 à 250, tandis que dans le cas où b>37 le rapport b:a est d'au moins 1:1, et

d vaut 0 ou 1,

C) une résine acrylique soluble dans les alcalis,

D) une base inorganique ou organique, et

E) de l'eau

comme composants essentiels.

**2.** Préparations de pigments selon la revendication 1, qui contiennent comme composant C) un copolymère de styrène-acrylate ayant une teneur en styrène de 35 à 50 % en poids et un indice d'acide de 130 à 250.

**3.** Préparations de pigments selon la revendication 1 ou 2, qui contiennent comme composant C) un copolymère de styrène-acrylate ayant une masse moléculaire moyenne $M_w$ de 1000 à 15000.

**4.** Préparations de pigments selon les revendications 1 à 3, qui, à chaque fois par rapport au poids de la préparation, contiennent

0,1 à 35 % en poids du composant A),
0,1 à 25 % en poids du composant B),
0,1 à 40 % en poids du composant C),
0,1 à 10 % en poids du composant D) et
au moins 35 % en poids du composant E).

**5.** Préparations de pigments selon les revendications 1 à 4, qui contiennent en outre un alcool plurivalent, un polyalkylèneglycol, un éther alkylique de polyalkylèneglycol ou une N-alkylpyrrolidone ou des mélanges de ceux-ci en tant que composant F).

**6.** Préparations de pigments selon la revendication 5, qui, par rapport au poids de la préparation, contiennent 0,1 à 35 % en poids du composant F).

**7.** Préparations de pigments selon les revendications 1 à 6, dans lesquelles 95 % des particules de pigments (A) contenues sont $\leq 1\ \mu m$.

**8.** Utilisation des préparations de pigments selon les revendications 1 à 7 comme encres.

**9.** Utilisation des préparations de pigments selon les revendications 1 à 7 comme encres pour le procédé à jet d'encre.

**10.** Procédé pour l'impression de substrats à configuration plane ou tridimensionnelle dans le procédé à jet d'encre, **caractérisé par le fait qu'**on applique des préparations de pigments selon les revendications 1 à 7 sur le substrat.

**11.** Utilisation des préparations de pigments selon les revendications 1 à 7 pour la préparation de toners.